# EUROPÄISCHE PATENTSCHRIFT

(11) **EP 3 283 902 B1**
(45) Veröffentlichungstag und Bekanntmachung des Hinweises auf die Patenterteilung: **06.10.2021**
(21) Anmeldenummer: 16708660.2
(22) Anmeldetag: 08.03.2016
(51) Int. Cl.: G01S 15/931, G01S 7/521, G10K 11/28, G10K 11/32, G10K 9/20

(54) **ULTRASCHALLSENSOR MIT SCHALLTRICHTER**
ULTRASONIC SENSOR WITH HORN
CAPTEUR ULTRASONORE COMPORTANT UN PAVILLON ACOUSTIQUE

(30) Priorität: 15.04.2015 DE 102015206799
(43) Veröffentlichungstag der Anmeldung: 21.02.2018
(73) Patentinhaber: Robert Bosch GmbH, 70442 Stuttgart (DE)
(72) Erfinder: VACZI, Peter, 1117 Budapest (HU); PAPP, Kristof, 1121 Budapest (HU); VOROS, Balazs, 6120 Kiskunmajsa (HU); IMRE, Viktor, 2700 Cegled (HU); MESZAROS, Albert, 1054 Budapest (HU); BRAUN, Zoltan, 1094 Budapest (HU)
(86) Internationale Anmeldenummer: PCT/EP2016/054868
(87) Internationale Veröffentlichungsnummer: WO 2016/165879

(56) Entgegenhaltungen:
- DE-A1-102007 021 616
- DE-A1-102010 031 573
- DE-A1-102010 042 653
- JP-A- S61 250 510

## Beschreibung

### Stand der Technik

Die Erfindung betrifft ein Ultraschallsensor umfassend einen Schallwandler und einen Schalltrichter, wobei der Schallwandler an einer Grundöffnung des Schalltrichters angeordnet ist. Ein weiterer Aspekt der Erfindung betrifft eine Umfeldsensoreinrichtung für ein Fahrzeug umfassend mindestens einen solchen Ultraschallsensor.

Moderne Fahrzeuge sind mit einer Vielzahl von Fahrerassistenzsystemen ausgerüstet, die zu ihrer Funktion auf Informationen über das Umfeld des Fahrzeugs angewiesen sind. Zur Erfassung des Fahrzeugumfelds werden häufig Sensoren eingesetzt, die auf Ultraschallbasis arbeiten. Diese Ultraschallsensoren umfassen einen Schallwandler, über den ein Ultraschallsignal ausgesendet und ein von einem Objekt reflektiertes Ultraschallecho wieder empfangen wird. Aus der Zeit, die zwischen dem Aussenden des Ultraschallpulses und dem Empfangen des Ultraschallechos vergangen ist, und der bekannten Schallgeschwindigkeit in Luft kann der Abstand zwischen dem Fahrzeug und dem reflektierenden Objekt berechnet werden. Das Sichtfeld des Ultraschallsensors, in dem Objekte erkannt werden können, ist dabei von der Abstrahlcharakteristik des Ultraschallsensors abhängig. Die Abstrahlcharakteristik bezeichnet dabei wie die Abstrahlung des Ultraschalls erfolgt, insbesondere ob diese breit gefächert oder gerichtet erfolgt.

Aus DE 10 2012 024 848 A1 ist eine Ultraschallsensoranordnung eines Kraftfahrzeugs bekannt, bei der die Ultraschallsensoren eine Richtcharakteristik aufweisen. Dadurch soll vermieden werden, dass Reflexionen von Ultraschall, beispielsweise von einem am Fahrzeug angebrachten Kennzeichen, Fehlmessungen auslösen. Zur Erzeugung der Richtcharakteristik wird ein Schalltrichter verwendet, der einen Vorsprung bildet, der zwischen einer Schallleitfläche und dem Kennzeichen angeordnet ist.

Aus DE 10 2007 053 033 A1 ist eine Überwachungseinrichtung für den toten Winkel bei Fahrzeugen bekannt. Dabei ist vorgesehen, das Sichtfeld eines Ultraschallsensors so zu beeinflussen, dass nachfolgende Fahrzeuge auf der gleichen Fahrspur nicht erfasst werden. Als Mittel zur Formung des Sichtfelds wird ein asymmetrischer Schalltrichter verwendet, dessen äußere Wand elliptisch ausgestaltet ist.

Das Dokument DE 10 2007 021 616 A1 beschreibt einen Wellenleiter mit zwei Öffnungen. Ein Wandbereich dient hierbei zusammen mit dem gegenüberliegenden Wandbereich und einem weiteren Wandbereich zum Ausbilden der ersten Öffnung des Wellenleiters. Diese erste Öffnung zeigt in Richtung eines Objekts in der Umgebung. Eine weitere Öffnung des Ultraschallsensors, welche an den Schallwandler des Ultraschallsensors angrenzt, wird durch zwei weitere gegenüberliegende Wandbereiche gebildet, sodass die empfangenen Strahlen von der ersten zu der zweiten Öffnung hin um 90° abgelenkt werden.

Das Dokument DE 10 2010 031 573 A1 zeigt eine Ultraschallsensoranordnung mit einer Ultraschallsensoranordnung. Die Ultraschallsensoranordnung umfasst mindestens ein Ultraschallsensorelement, das in einer Ausnehmung oder einem nach außen offenen Hohlraum der Fahrzeugverkleidung vorgesehen ist. Die Ausnehmung oder der nach außen offene Hohlraum wird von mindestens einem Fahrzeugverkleidungselement gebildet, dessen Außenseite nicht zur Aufnahme des Ultraschallsensors unterbrochen ist.

Das Dokument DE 10 2010 042 653 beschreibt eine Vorrichtung zur fahrzeugunterstützten Objekterfassung. Diese weist einen Wandler mit einer Richtcharakteristik auf, die mindestens zwei Richtkeulen hat.

Das Dokument JP S 61 250510 A beschreibt einen Ultraschallsensor gemäß des Oberbegriffs von Anspruch 1.

Nachteilig an den bekannten Ultraschallsensoren ist, dass deren Sichtfeld neben den erwünschten Detektionsbereichen, in denen die Anwesenheit von Objekten erkannt werden kann, auch weitere Detektionsbereiche aufweisen können, was zu Fehldetektionen führt.

### Offenbarung der Erfindung

Es wird ein Ultraschallsensor umfassend einen Schallwandler und einen Schalltrichter vorgeschlagen, wobei der Schallwandler an einer Grundöffnung des Schalltrichters angeordnet ist. Ferner ist vorgesehen, dass der Schalltrichter bezogen auf eine Schnittebene senkrecht zu einer Membran des Schallwandlers zumindest drei Wandabschnitte aufweist, wobei ein erster Wandabschnitt und ein zweiter Wandabschnitt an den Schallwandler angrenzen und wobei am vom Schallwandler entfernten Ende des ersten Wandabschnitts ein dritter Wandabschnitt angeordnet ist, der in Richtung des Schallwandlers angewinkelt ist.

Der Schalltrichter ist asymmetrisch geformt und weist neben der Grundöffnung auch eine Trichteröffnung auf, über die Ultraschall den Schalltrichter verlassen kann und Ultraschallechos in den Schalltrichter gelangen können.

Die Form der Grundöffnung und die Form des Schallwandlers sind bevorzugt so aufeinander abgestimmt, dass die Membran des Schallwandlers an die Grundöffnung direkt angrenzt, ohne dass eine Lücke auftritt. Durch die Lage der Membran des Schallwandlers wird eine Ebene definiert, wobei die erwähnte Schnittebene senkrecht zu dieser Ebene steht. Mit Bezug zu dieser Schnittebene wird die Wand des Schalltrichters in Wandabschnitte aufgeteilt, wobei der erste und der zweite Wandabschnitt an den Schallwandler bzw. an dessen Membran angrenzen.

Erfindungsgemäß ist die Form des Schalltrichters asymmetrisch ausgestaltet und zwar derart, dass bei Schallabstrahlung des Schallwandlers eine gerichtete Schallabstrahlung erfolgt. Dabei ist besonders bevorzugt, wenn die Form des Schalltrichters so gewählt ist, dass eine erste Schallkeule aufgrund der direkten Schallabstrahlung des Schallwandlers und des an dem ersten Wandabschnitt reflektierten Schalls entsteht und dass bei Schallabstrahlung des Schallwandlers eine zweite Schallkeule aufgrund von Interferenz zwischen dem direkten Schall und an Kanten des Schallwandlers gestreutem Fall entsteht. Dabei sind die Abstrahlrichtungen der ersten Schallkeule und der zweiten Schallkeule unterschiedlich.

Zur Ausbildung der asymmetrischen Form des Schalltrichters ist erfindungsgemäß vorgesehen, wenn bezogen auf die Schnittebene senkrecht zur Membran des Schallwandlers der erste Wandabschnitt zu einer in Abstrahlrichtung zeigenden Seite des Schallwandlers einen Winkel im Bereich von 180° und 90° einschließt. Weiterhin ist es erfindungsgemäß vorgesehen, wenn der zweite Wandabschnitt zu der in Abstrahlrichtung zeigenden Seite des Schallwandlers einen Winkel im Bereich von 180° und 270° einschließt.

Der Winkel zwischen dem ersten Wandabschnitt und dem Schallwandler ist so gewählt, dass der erste Wandabschnitt in Richtung der in Abstrahlrichtung weisenden Seite des Schallwandlers angewinkelt ist. Dementsprechend ist der Winkel zwischen dem zweiten Wandabschnitt und dem Schallwandler so gewählt, dass der zweite Wandabschnitt von der in Abstrahlrichtung zeigenden Seite des Schallwandlers weg weist.

Bevorzugt ist der dritte Wandabschnitt derart ausgestaltet, dass eine Wellenleitung von Schallwellen des Schallwandlers entlang des ersten Wandabschnitts zum Trichterrand unterdrückt wird. Damit wird auch das Entstehen einer weiteren Schallkeule unterdrückt. Bevorzugt ist der Schalltrichter derart ausgestaltet, dass beim Aussenden von Schall durch den Schallwandler genau zwei Schallkeulen entstehen.

Die Form der Wandabschnitte, also des ersten, des zweiten und/oder des dritten Wandabschnitts sind erfindungsgemäß ausgestaltet, dass diese bezogen auf die Schnittebene als Gerade erscheinen. Die Übergänge zwischen diesen Geraden sind in z. B. in scharfer, kantiger Form oder in glatter Form gestaltet.

Bevorzugt ist der Winkel zwischen dem ersten Wandabschnitt und dem dritten Wandabschnitt so gewählt, dass der dritte Wandabschnitt zu der Abstrahlrichtung des Schallwandlers einen Winkel im Bereich von -10° bis +10° einschließt. Besonders bevorzugt ist es, wenn der Winkel zwischen dem ersten Wandabschnitt und dem dritten Wandabschnitt so gewählt ist, dass der dritte Wandabschnitt parallel zu der Abstrahlrichtung des Schallwandlers verläuft.

Bevorzugt beträgt die Länge des dritten Wandabschnitts, bezogen auf die Schnittebene, im Bereich von 1 mm bis 5 mm. In Bezug auf die dreidimensionale Form des Schalltrichters bilden die Wandabschnitte die Wandung des Trichters aus, wobei der erste Wandabschnitt in den zweiten Wandabschnitt kontinuierlich übergeht. Bevorzugt bezeichnet die angegebene Länge für den dritten Wandabschnitt dessen größte Länge. Die größte Länge tritt für eine Schnittebene auf, bei der der Absstand zu einem Übergang des zweiten Wandabschnitts zum ersten Wandabschnitt maximal ist. Bevorzugt verringert sich die Länge des dritten Wandabschnitts ausgehend von der maximalen Länge stetig. Bevorzugt verschwindet der dritte Wandabschnitt am Übergang vom ersten Wandabschnitt zum zweiten Wandabschnitt.

Der Schalltrichter weist eine Grundöffnung sowie eine Trichteröffnung auf. Die Trichteröffnung wird durch einen Trichterrand des Schalltrichters begrenzt.

Bevorzugt entspricht der Querschnitt der Grundöffnung des Schalltrichters in einer Projektion auf die Ebene, in der die Membran des Schallwandlers angeordnet ist, einer Kreisform.

Des Weiteren ist es bevorzugt, wenn der Querschnitt des Trichterrands des Schalltrichters in einer Projektion auf die Ebene, in der die Membran des Schallwandlers angeordnet ist, einer Kreisform oder einer Ellipsenform entspricht.

In einer Ausführungsform des Ultraschallsensors ist, bezogen auf eine Projektion auf die Ebene, in der die Membran des Schallwandlers angeordnet ist, der geometrische Schwerpunkt der Form des Trichterrands versetzt von dem geometrischen Schwerpunkt der Form der Grundöffnung des Schalltrichters angeordnet. In einer weiteren Ausführungsform des Ultraschallsensors ist es denkbar, dass bezogen auf diese Projektion die geometrischen Schwerpunkte der Formen des Trichterrands und der Grundöffnung auf einem gemeinsamen Punkt in dieser Ebene liegen.

Ein weiterer Aspekt der Erfindung betrifft eine Umfeldsensoreinrichtung für ein Fahrzeug, welche mindestens einen Ultraschallsensor wie hierin beschrieben umfasst. Bevorzugt wird dabei der mindestens eine Ultraschallsensor so am Fahrzeug angeordnet, dass der Detektionsbereich des Ultraschallsensors so ausgerichtet ist, dass keine Objekte erfasst werden können, die sich hinter dem Fahrzeug auf der gleichen Fahrspur befinden. Bevorzugt wird dabei eine Anordnung im Bereich des Übergangs von einer Seitenpartie zum Heck des Fahrzeugs. Das Fahrzeug ist bevorzugt ein Kraftfahrzeug.

Wird der Übergang von einer Seitenpartie des Fahrzeugs zum Heck als konvex bezeichnet, dann sind die drei Wandabschnitte des Schalltrichters bevorzugt wie folgt ausgebildet: Übergang von der Seitenpartie des Fahrzeugs zum zweiten Wandabschnitt konvex, Übergang vom zweiten Wandabschnitt zum Schallwandler konvex, Übergang vom Schallwandler zum ersten Wandabschnitt konkav, Übergang vom ersten Wandabschnitt zum dritten Wandabschnitt konkav und Übergang vom dritten Wandabschnitt zum Heck konvex.

Bevorzugt wird die Umfeldsensoreinrichtung im Bereich des Übergangs von einer Seitenpartie zum Heck des Fahrzeugs an einer Stelle angeordnet, bei der bezogen auf eine Projektion auf eine horizontale Ebene eine senkrecht auf der Außenkontur des Fahrzeugs stehende Gerade mit der Längsachse des Fahrzeugs einen Winkel von 50° bis 60° einschließt. Bevorzugt beträgt der Winkel 55°. Dabei sind die Winkel zwischen dem Schallwandler und dem ersten bzw. dem zweiten Wandabschnitt des Schalltrichters bevorzugt so gewählt, dass zwischen der Abstrahlrichtung des Schallwandlers und der Längsachse des Fahrzeugs ein Winkel vom 40° eingeschlossen ist.

Die beschriebene Umfeldsensoreinrichtung sowie der beschriebene Ultraschallsensor können insbesondere in Zusammenhang mit einem Fahrerassistenzsystem eines Fahrzeugs verwendet werden. Dabei kann das Fahrerassistenzsystem beispielsweise ausgewählt sein aus einem Totwinkelassistenten, einem Parklenkassistent oder einem Assistenten zum Erkennen von Parkplätzen.

### Vorteile der Erfindung

Der erfindungsgemäße Ultraschallsensor umfasst einen Schallwandler und einen Schalltrichter wobei der Schalltrichter so ausgestaltet ist, dass das Sichtfeld des Ultraschallsensors genau zwei Detektionsbereiche umfasst. Diese beiden Detektionsbereiche werden durch genau zwei Schallkeulen ausgebildet. Die besondere Form des Schalltrichters, insbesondere durch das Vorsehen des dritten Wandabschnitts, unterdrücken das Entstehen weiterer Schallkeulen und damit das Auftreten weiterer Detektionsbereiche. Dadurch wird vorteilhaft sichergestellt, dass ein durch den Ultraschallsensor empfangenes Ultraschallecho auf das Vorhandensein eines Objekts in dem durch die beiden Schallkeulen definierten Detektionsbereich hinweist.

Bei Umfeldsensoren gemäß dem Stand der Technik ist es hingegen möglich, dass aufgrund einer Wellenleitung entlang einer Wand des Schalltrichters neben den zwei gewünschten Schallkeulen weitere Schallkeulen auftreten. Damit geht einher, dass weitere, nicht erwünschte Detektionsbereiche entstehen. Ein Objekt im Umfeld des Fahrzeugs, welches sich in einem Detektionsbereich einer solchen Schallkeule befindet, würde dann zu einer Fehldetektion führen. Solche Fehldetektionen werden durch den erfindungsgemäßen Umfeldsensor zuverlässig vermieden.

### Kurze Beschreibung der Zeichnungen

Ausführungsbeispiele der Erfindung sind in den Beispielen dargestellt und in der nachfolgenden Beschreibung näher erläutert.

Es zeigen:
- Figur 1: eine schematische Darstellung des Sichtfelds einer Umfeldsensoreinrichtung mit einem Ultraschallsensor gemäß dem Stand der Technik,
- Figur 2: eine schematische Darstellung der gerichteten Schallabstrahlung eines Ultraschallsensors gemäß dem Stand der Technik,
- Figur 3: erfindungsgemäßer Ultraschallsensor angeordnet an einem Fahrzeugs,
- Figur 4: eine Schnittdarstellung des erfindungsgemäßen Ultraschallsensors und
- Figur 5: Sichtfeld eines erfindungsgemäßen Ultraschallsensors.

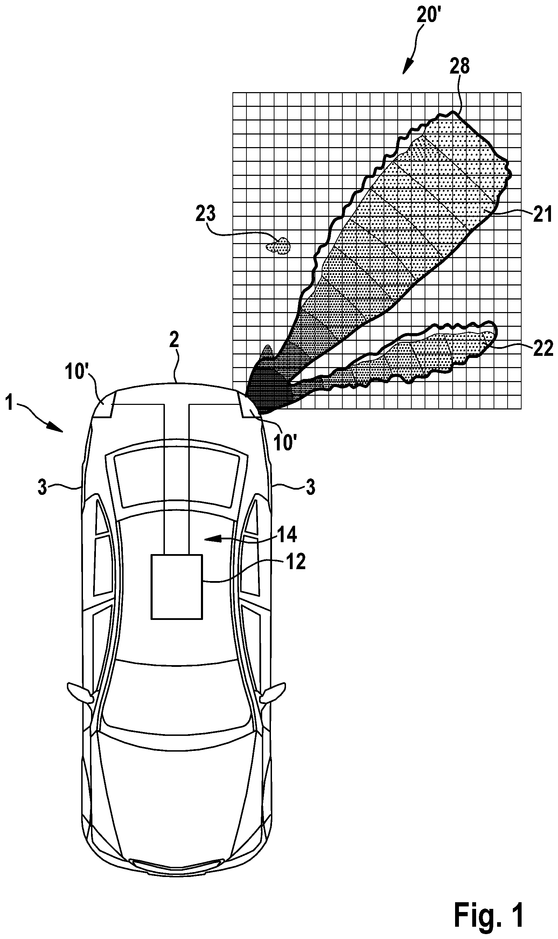

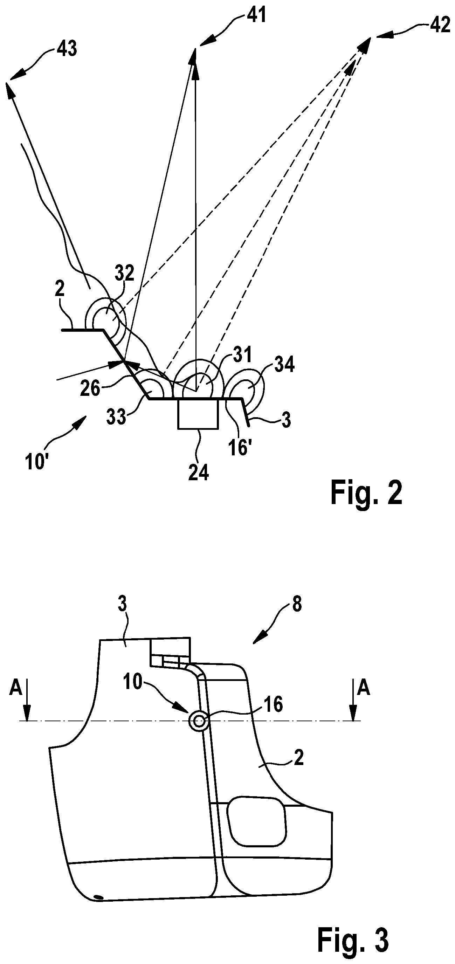

In Figur 1 ist ein Fahrzeug 1 dargestellt, welches mit einer Umfeldsensoreinrichtung 14 versehen ist. Die Umfeldsensoreinrichtung 14 umfasst ein Steuergerät 12 sowie in der in Figur 1 dargestellten Variante zwei Ultraschallsensoren 10' gemäß dem Stand der Technik. Die Ultraschallsensoren 10' sind dabei in den Übergangsbereichen von den Seitenpartien 3 zum Heck 2 des Fahrzeugs 1 angeordnet. Beispielhaft ist für einen der beiden dargestellten Ultraschallsensoren 10' das Sichtfeld 20' dargestellt. Objekte, die sich innerhalb des Sichtfelds 20' befinden, können durch den betreffenden Ultraschallsensor 10' erkannt werden. Zum Erkennen eines Objekts sendet der Ultraschallsensor 10' ein Ultraschallsignal aus. Dieses wird nicht ungerichtet abgegeben, sondern mit Hilfe eines Schalltrichters 16', vergleiche Figur 2, gerichtet abgegeben, wobei drei Schallkeulen 41, 42, 43, vergleiche Figur 2, mit dazugehörigen drei Detektionsbereichen 21, 22 und 23 entstehen. Trifft der Schall einer der Schallkeulen 41, 42, 43 auf ein Objekt, so entsteht ein Ultraschallecho, welches wiederum durch den Ultraschallsensor 10' detektiert werden kann. Die Detektionsbereiche 21, 22, 23 stellen dabei die Bereiche dar, innerhalb denen die Anwesenheit eines Objekts durch den Ultraschallsensor 10' erkannt werden kann.

Die in Figur 1 dargestellte Umfeldsensoreinrichtung 14 ist beispielsweise Teil eines Totwinkelassistenten. Für die Funktion dieses Totwinkelassistenten ist es entscheidend, weitere Fahrzeuge zu erkennen, die in den toten Winkel des Fahrzeugs 1 eintreten. Dazu ist es beabsichtigt, Fahrzeuge zu erkennen, die sich auf einer Fahrspur links bzw. rechts vom Fahrzeug 1 befinden und dem Fahrzeug 1 nachfolgen. Weitere Fahrzeuge, die sich auf der gleichen Fahrspur wie das Fahrzeug 1 befinden und diesem direkt nachfolgen, können nicht in den toten Winkel eintreten, so dass bei einem Fahrzeug auf der gleichen Fahrspur wie das Fahrzeug 1 keine Warnung erfolgen soll. Daher sind die Ultraschallsensoren 10' so ausgestaltet, dass sich die Schallabstrahlung im Wesentlichen auf zwei Schallkeulen 41, 42 konzentriert, die die beiden Detektionsbereiche 21 und 22 ausbilden. In der Darstellung der Figur 1 weisen die Detektionsbereiche 21, 22, 23 Markierungen auf, die dem zunehmenden Abstand zum Ultraschallsensor 10' entsprechen. Die dicke durchgezogene Linie stellt den gewünschten Detektionsbereich 28 dar.

Wie der Darstellung der Figur 1 entnommen werden kann, treten jedoch bei Ultraschallsensoren 10' gemäß dem Stand der Technik weitere Schallkeulen auf, die wie in Figur 1 beispielhaft skizziert, zu einem dritten Detektionsbereich 23 führen. Der dritte Detektionsbereich 23 befindet sich direkt hinter dem Fahrzeug 1, so dass ein dem Fahrzeug 1 direkt nachfolgendes weiteres Fahrzeug fälschlicherweise eine Totwinkelwarnung auslösen kann.

Figur 2 zeigt schematisch die gerichtete Schallabstrahlung eines Ultraschallsensors 10' gemäß dem Stand der Technik. Dabei zeigt Figur 2 einen horizontalen Schnitt durch einen solchen Ultraschallsensor 10'. Der Ultraschallsensor 10' umfasst einen Schallwandler 24 sowie einen Schalltrichter 16'. Der Ultraschallsensor 10' ist in das Fahrzeug 1 integriert und dort so angeordnet, dass durch den Schallwandler 24 erzeugter Ultraschall in die Umgebung abgestrahlt werden kann.

In der Figur 2 ist schematisch dargestellt, dass bei Abstrahlung von Ultraschall durch den Schallwandler 24 drei Schallkeulen 41, 42, 43 entstehen. Die erste Schallkeule 41 ist dabei gebildet aus dem durch den Schallwandler 24 direkt abgegebenen Schall sowie dem an einer Seitenwand 26 des Schalltrichters 16' reflektierten Schalls.

Die zweite Schallkeule 42 entsteht durch Interferenz mehrerer Schallquellen 31, 32, 33, 34, wobei der direkte Schall des Schallwandlers 24 eine erste Schallquelle 31 darstellt und die Kanten des Schalltrichters 16' drei weitere Schallquellen 32, 33, 34 darstellen.

Der größte Anteil des durch den Schallwandler 24 erzeugten Ultraschalls wird über die erste Schallkeule 41 und die zweite Schallkeule 42 in die Umgebung abgegeben. Ein kleiner Teil des durch den Schallwandler 24 erzeugten Ultraschalls wird jedoch in Form einer dritten Schallkeule 43 abgegeben. Die dritte Schallkeule 43 entsteht durch einen Wellenleitungseffekt, bei dem die Schallwellen entlang der Seitenwand 26 aus dem Schalltrichter 16' geleitet werden. Die dritte Schallkeule 43 umfasst nur einen kleinen Teil des abgestrahlten Ultraschalls, es kann jedoch wie in Figur 1 skizziert unter bestimmten Umständen aufgrund der dritten Schallkeule 43 zu Fehldetektionen des Ultraschallsensors 10' kommen.

### Ausführungsformen der Erfindung

In der nachfolgenden Beschreibung der Ausführungsbeispiele der Erfindung werden gleiche oder ähnliche Elemente mit gleichen oder ähnlichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

In Figur 3 ist ein Ausschnitt einer Karosserie 8 eines Fahrzeugs 1 dargestellt. An der Karosserie 8 ist ein Ultraschallsensor 10 mit einem Schalltrichter 16 angeordnet. Dabei befindet sich der Ultraschallsensor 10 im Bereich des Übergangs zwischen einer Seitenpartie 3 und dem Heck 2 des Fahrzeugs 1. In der Darstellung der Figur 3 weist das Heck 2 eine Zugangsöffnung für einen Kofferraum des Fahrzeugs 1 auf, wobei in der Figur 3 keine Kofferraumklappe eingezeichnet ist.

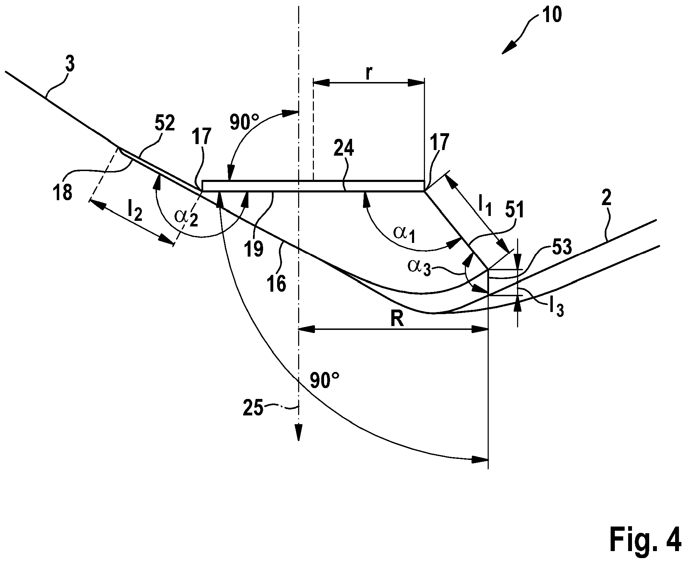

Figur 4 zeigt eine Draufsicht auf einen Schnitt durch den Ultraschallsensor 10 entlang der in Figur 3 markierten Schnittebene A - A. Der Ultraschallsensor 10 umfasst neben dem Schalltrichter 16 einen Schallwandler 24 mit einer Membran 19. Der Schallwandler 24 ist dabei so in einer Grundöffnung 17 des Schalltrichters 16 angeordnet, dass die Membran 19 und damit eine Abstrahlrichtung 25 nach außen, das heißt in Richtung des offenen Trichterrands 18 zeigt. In der in Figur 4 dargestellten Ausführungsform weist der Schallwandler 24 bzw. dessen Membran 19 eine runde Form auf, genau wie die Grundöffnung 17 des Schalltrichters 16. Die Membran 19 weist dabei einen Radius r auf.

Bezogen auf die in Figur 4 dargestellte Schnittebene, die senkrecht zur Abstrahlrichtung 25 sowie senkrecht zu einer Ebene verläuft, in der die Membran 19 des Schallwandlers 24 liegt, grenzen zwei Wandabschnitte 51, 52 des Schalltrichters 16 an den Schallwandler 24 bzw. an dessen Membran 19 an. Wie der Darstellung der Figur 4 entnommen werden kann, ist der Schalltrichter 16 asymmetrisch ausgestaltet, wobei mit Bezug auf die Abstrahlrichtung 25 der erste Wandabschnitt 51 nach vorne angewinkelt ist, das heißt in Richtung der Seite des Schallwandlers 24, die in Abstrahlrichtung 25 liegt. Der zweite Wandabschnitt 52 ist entsprechend nach hinten geklappt, also weg von der in Abstrahlrichtung 25 weisenden Seite des Schallwandlers 24. Daher wird zwischen dem Schallwandler 24 bzw. zwischen der Membran 19 und dem ersten Wandabschnitt 51 ein Winkel α₁ eingeschlossen, der zwischen 90° und 180° liegt. Entsprechend ist zwischen dem Schallwandler 24 bzw. dessen Membran 19 und dem zweiten Wandabschnitt 52 ein Winkel α₂ eingeschlossen, der im Bereich von 180° bis 270° liegt.

An dem nicht an den Schallwandler 24 angrenzenden Ende des ersten Wandabschnitts 51 grenzt ein dritter Wandabschnitt 53 des Schalltrichters 16 an. Dieser ist mit Bezug auf den ersten Wandabschnitt 51 in Richtung des Schallwandlers 24 angewinkelt. Dabei ist in einer bevorzugten Ausführungsform der Winkel α₃ zwischen dem ersten Wandabschnitt 51 und dem dritten Wandabschnitt 53 so gewählt, dass in der in Figur 4 dargestellten Schnittebene der dritte Wandabschnitt 53 parallel zur Abstrahlrichtung 25 liegt. In weiteren Ausführungsformen kann der Winkel α₃ so gewählt sein, dass zwischen dem dritten Wandabschnitt 53 und der Abstrahlrichtung 25 ein Winkelbereich von -10° bis +10° eingeschlossen ist.

Die drei Wandabschnitte 51, 52, 53 sind bevorzugt bezüglich der in Figur 4 dargestellten Schnittebene gerade ausgebildet, wobei die Geraden, bzw. Geradensegmente, jeweils eine Länge l₁, l₂, l₃ aufweisen. Die Länge l₃ des dritten Wandabschnitts 53 liegt dabei bevorzugt im Bereich von 1 mm bis 5 mm. Die Schnittebene ist hierbei so gewählt, dass die Länge l₃ des dritten Wandabschnitts 53 ihren größten Wert annimmt.

Die Form des Trichterrands 18 sowie die Form der Grundöffnung 17 des in Figur 4 dargestellten Ausführungsbeispiels entsprechen bei Projektion auf eine Ebene in der die Membran 19 des Schallwandlers 24 liegt bzw. die Ebene, wie Sie in Figur 3 dargestellt ist, jeweils einer Kreisform, wobei die Grundöffnung 17 einen Radius r und die durch den Trichterrand 18 gebildete Trichteröffnung einen Durchmesser R aufweist. Wie der Darstellung in Figur 4 entnommen werden kann liegen dabei die Mittelpunkte der Kreisformen bzw. die geometrischen Schwerpunkte dieser Formën nicht auf einem gemeinsamen Punkt, sondern sind versetzt zueinander.

Durch den dritten Wandabschnitt 53 erhält der Schalltrichter 16 eine Kante durch die eine Wellenleitung des Ultraschalls entlang des ersten Wandabschnitts 51 unterbrochen wird. Der Ultraschallsensor 10 bildet somit keine dritte Schallkeule 43 wie mit Bezug zu Figur 2 beschrieben aus. Eine erste Schallkeule 41 sowie eine zweite Schallkeule 42 entstehen bei Schallabstrahlung durch den Schallwandler 24 genau wie mit Bezug zu Figur 2 beschrieben. Dabei entsteht die erste Schallkeule 41 durch direkten Schall des Schallwandlers 24 in Kombination mit am ersten Wandabschnitt 51 reflektiertem Schall und die zweite Schallkeule 42 entsteht durch Interferenz zwischen dem direkten Schall des Schallwandlers 24 und an Kanten des Schalltrichters 16 gestreutem Schall.

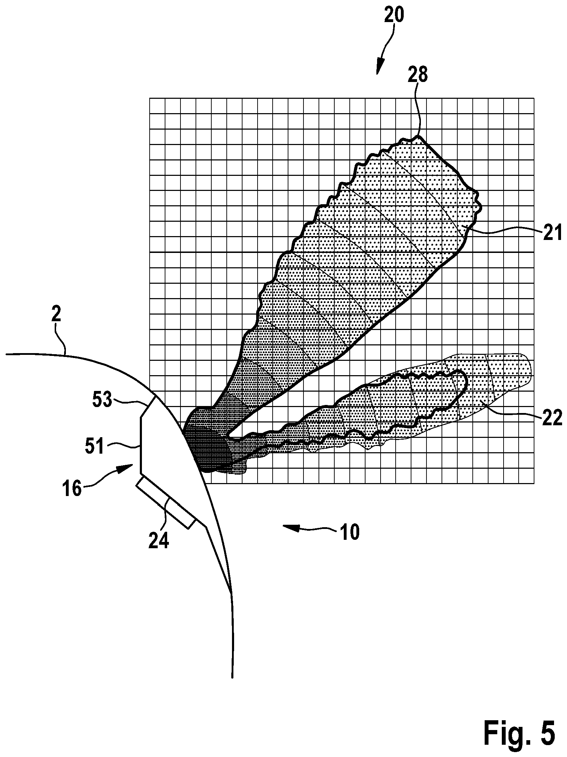

Figur 5 zeigt das Sichtfeld 20 eines erfindungsgemäßen Ultraschallsensors 10. Die Schallabstrahlung des Ultraschallsensors 10 erfolgt nun derart gerichtet, dass genau zwei Schallkeulen 41, 42 (nicht dargestellt) entstehen. Daher weist das Sichtfeld 20 des Ultraschallsensors 10 nur genau zwei Detektionsbereiche 21, 22 auf. Die Markierungen in den Detektionsbereichen 21, 22 entsprechen dabei dem zunehmenden Abstand zum Ultraschallsensor 10. Die dicke durchgezogene Linie markiert den gewünschten Detektionsbereich 28. Das Auftreten des dritten Detektionsbereichs 23 wird durch die durch den dritten Wandabschnitt 53 gebildete Kante verhindert, da eine Wellenleitung von Schall des Schallwandlers 24 entlang des ersten Wandabschnitts 51 durch die Kante gestoppt wird. Es tritt somit keine dritte Schallkeule 43 auf. Wie der Darstellung der Figur 5 entnommen werden kann ist aufgrund des dritten Wandabschnitts 53 die zweite Schallkeule 42 und damit der zweite Detektionsbereich 22 stärker ausgeprägt.

Die Erfindung ist nicht auf die hier beschriebenen Ausführungsbeispiele und die darin hervorgehobenen Aspekte beschränkt. Vielmehr sind innerhalb des durch die Ansprüche angegebenen Bereichs eine Vielzahl von Abwandlungen möglich, die im Rahmen fachmännischen Handelns liegen.

## Patentansprüche

1. Ultraschallsensor (10) umfassend einen Schallwandler (24) und einen Schalltrichter (16), wobei der Schallwandler (24) an einer Grundöffnung (17) des Schalltrichters (16) angeordnet ist, wobei der Schalltrichter (16) bezogen auf eine Schnittebene senkrecht zu einer Membran (19) des Schallwandlers (24) zumindest drei Wandabschnitte (51, 52, 53) aufweist, wobei ein erster Wandabschnitt (51) und ein zweiter Wandabschnitt (52) an den Schallwandler (24) angrenzen und wobei am vom Schallwandler (24) entfernten Ende des ersten Wandabschnitts (51) ein dritter Wandabschnitt (53) angeordnet ist, der mit Bezug auf den ersten Wandabschnitt (51) in Richtung des Schallwandlers (24) angewinkelt ist,
wobei der Winkel zwischen dem ersten Wandabschnitt (51) und dem dritten Wandabschnitt (53) so gewählt ist, dass der dritte Wandabschnitt (53) im Wesentlichen parallel zu der Abstrahlrichtung (25) des Schallwandlers (24) verläuft, wobei eine Form des ersten, des zweiten und des dritten Wandabschnitts so ausgestaltet sind, dass diese bezogen auf die Schnittebene jeweils als Gerade erscheinen, wobei die Übergänge zwischen diesen Geraden in kantiger Form gestaltet sind, **dadurch gekennzeichnet, dass** die Form des Schalltrichters (16) derart asymmetrisch ausgestaltet ist, dass bei Schallabstrahlung des Schallwandlers (24) eine erste Schallkeule (41) aufgrund der direkten Schallabstrahlung des Schallwandlers (24) und des an dem ersten Wandabschnitt (51) reflektierten Schalls entsteht und dass bei Schallabstrahlung des Schallwandlers (24) eine zweite Schallkeule (42) aufgrund von Interferenz zwischen dem direkten Schall und an Kanten des Schalltrichters (16) gestreutem Schall entsteht, wobei die Abstrahlrichtungen der ersten Schallkeule (41) und der zweiten Schallkeule (42) unterschiedlich sind,
wobei bezogen auf die Schnittebene der erste Wandabschnitt (51) zu einer in Abstrahlrichtung (25) zeigenden Seite des Schallwandlers (24) einen Winkel im Bereich von 180° und 90° einschließt, und
der zweite Wandabschnitt (52) zu der in Abstrahlrichtung (25) zeigenden Seite des Schallwandlers (24) einen Winkel im Bereich von 180° und 270° einschließt.

2. Ultraschallsensor (10) gemäß Anspruch 1, **dadurch gekennzeichnet, dass** der dritte Wandabschnitt (53) in der Schnittebene eine Länge (l₃) im Bereich von 1 mm bis 5 mm aufweist.

3. Ultraschallsensor (10) gemäß einem der Ansprüche 1 oder 2, **dadurch gekennzeichnet, dass** der Querschnitt der Grundöffnung (17) des Schalltrichters (16) in einer Projektion auf eine Ebene, in der die Membran (19) des Schallwandlers (24) angeordnet ist, einer Kreisform entspricht.

4. Ultraschallsensor (10) gemäß einem der Ansprüche 1 bis 3, **dadurch gekennzeichnet, dass** der Querschnitt eines Trichterrands (18) des Schalltrichters (16) in einer Projektion auf eine Ebene, in der die Membran (19) des Schallwandlers (24) angeordnet ist, einer Kreisform oder einer Ellipsenform entspricht.

5. Ultraschallsensor (10) gemäß einem der Ansprüche 1 bis 4, **dadurch gekennzeichnet, dass** bezogen auf eine Projektion auf eine Ebene, in der die Membran (19) des Schallwandlers (24) angeordnet ist, der geometrische Schwerpunkt der Form des Trichterrands (18) versetzt von dem geometrischen Schwerpunkt der Form der Grundöffnung (17) des Schalltrichters (16) angeordnet ist.

6. Umfeldsensoreinrichtung (14) für ein Fahrzeug (1) umfassend mindestens einen Ultraschallsensor (10) gemäß einem der Ansprüche 1 bis 5.

## Claims

1. Ultrasonic sensor (10) comprising a sound transducer (24) and a horn (16), wherein the sound transducer (24) is arranged at a base opening (17) of the horn (16), wherein the horn (16) has at least three wall segments (51, 52, 53) with respect to a sectional plane perpendicular to a membrane (19) of the sound transducer (24), wherein a first wall segment (51) and a second wall segment (52) adjoin the sound transducer (24) and a third wall segment (53) is arranged at the end of the first wall segment (51) remote from the sound transducer (24) and is angled with respect to the first wall segment (51) in the direction of the sound transducer (24),
wherein the angle between the first wall segment (51) and the third wall segment (53) is chosen such that the third wall segment (53) runs substantially parallel to the radiating direction (25) of the sound transducer (24), wherein the first, second and third wall segments are designed in such a form that they each appear as a straight line with respect to the sectional plane, wherein the transitions between these straight lines are shaped in an angular form,
**characterized in that** the form of the horn (16) is designed asymmetrically in such a way that, during the radiation of sound from the sound transducer (24), a first sound lobe (41) is produced as a result of the direct radiation of sound from the sound transducer (24) and the sound reflected at the first wall segment (51) and that, during the radiation of sound from the sound transducer (24), a second sound lobe (42) is produced as a result of interference between the direct sound and sound scattered at edges of the horn (16), wherein the radiating directions of the first sound lobe (41) and the second sound lobe (42) are different,
wherein, with respect to the sectional plane, the first wall segment (51) forms an angle in relation to a side of the sound transducer (24) facing in the radiating direction (25) in the range of 180° and 90°, and
the second wall segment (52) forms an angle in relation to the side of the sound transducer (24) facing in the radiating direction (25) in the range of 180° and 270°.

2. Ultrasonic sensor (10) according to Claim 1, **characterized in that** the third wall segment (53) has in the sectional plane a length (l₃) in the range of 1 mm to 5 mm.

3. Ultrasonic sensor (10) according to either of Claims 1 and 2, **characterized in that** the cross section of the base opening (17) of the horn (16) in a projection onto a plane in which the membrane (19) of the sound transducer (34) is arranged corresponds to a circular form.

4. Ultrasonic sensor (10) according to one of Claims 1 to 3, **characterized in that** the cross section of the funnel rim (18) of the horn (16) in a projection onto a plane in which the membrane (19) of the sound transducer (24) is arranged corresponds to a circular form or an elliptical form.

5. Ultrasonic sensor (10) according to one of Claims 1 to 4, **characterized in that**, with respect to a projection onto a plane in which the membrane (19) of the sound transducer (24) is arranged, the geometric centre of gravity of the form of the funnel rim (18) is arranged offset from the geometric centre of gravity of the form of the base opening (17) of the horn (16).

6. Environment sensor device (14) for a vehicle (1) comprising at least one ultrasonic sensor (10) according to one of Claims 1 to 5.

## Revendications

1. Capteur à ultrasons (10), comprenant un transducteur acoustique (24) et un pavillon acoustique (16), le transducteur acoustique (24) étant disposé au niveau d'une ouverture de base (17) du pavillon acoustique (16), le pavillon acoustique (16) présentant au moins trois sections de paroi (51, 52, 53) par rapport à un plan de coupe perpendiculaire à une membrane (19) du transducteur acoustique (24), une première section de paroi (51) et une deuxième section de paroi (52) étant adjacentes au transducteur acoustique (24), et dans lequel, à l'extrémité, éloignée du transducteur acoustique (24), de la première section de paroi (51) est disposée une troisième section de paroi (53) qui est coudée en direction du transducteur acoustique (24) par rapport à la première section de paroi (51),
l'angle entre la première section de paroi (51) et la troisième section de paroi (53) étant sélectionné de telle sorte que la troisième section de paroi (53) s'étend substantiellement en parallèle à la direction d'émission (25) du transducteur acoustique (24), une forme de la première, de la deuxième et de la troisième section de paroi étant configurée de telle sorte qu'elle apparaît respectivement comme une droite par rapport au plan de coupe, les transitions entre ces droites étant configurées de manière anguleuse, **caractérisé en ce que** la forme du pavillon acoustique (16) est configurée de manière asymétrique de telle sorte qu'en cas de rayonnement acoustique du transducteur acoustique (24), un premier lobe acoustique (41) se forme en raison du rayonnement acoustique direct du transducteur acoustique (24) et du son réfléchi sur la première section de paroi (51), et qu'en cas de rayonnement acoustique du transducteur acoustique (24), un deuxième lobe acoustique (42) se forme en raison de l'interférence entre le son direct et le son dispersé aux bords du pavillon acoustique (16), les directions de rayonnement du premier lobe acoustique (41) et du deuxième lobe acoustique (42) étant différentes,
dans lequel, par rapport au plan de coupe, la première section de paroi (51) définit avec un côté, orienté dans la direction de rayonnement (25), du transducteur acoustique (24) un angle dans la plage de 180° et 90°, et la deuxième section de paroi (52) définit avec le côté, orienté dans la direction de rayonnement (25), du transducteur acoustique (24) un angle dans la plage de 180° et 270°.

2. Capteur à ultrasons (10) selon la revendication 1, **caractérisé en ce que** la troisième section de paroi (53) présente dans le plan de coupe une longueur (l₃) dans la plage de 1 mm à 5 mm.

3. Capteur à ultrasons (10) selon l'une quelconque des revendications 1 et 2, **caractérisé en ce que** la section transversale de l'ouverture de base (17) du pavillon acoustique (16) correspond à une forme circulaire dans une projection sur un plan dans lequel est disposée la membrane (19) du transducteur acoustique (24).

4. Capteur à ultrasons (10) selon l'une quelconque des revendications 1 à 3, **caractérisé en ce que** la section transversale d'un bord de pavillon (18) du pavillon acoustique (16) correspond à une forme circulaire ou à une forme elliptique dans une projection sur un plan dans lequel est disposée la membrane (19) du transducteur acoustique (24).

5. Capteur à ultrasons (10) selon l'une quelconque des revendications 1 à 4, **caractérisé en ce que**, par rapport à une projection sur un plan dans lequel est disposée la membrane (19) du transducteur acoustique (24), le centre de gravité géométrique de la forme du bord de pavillon (18) est disposé de manière décalée par rapport au centre de gravité géométrique de la forme de l'ouverture de base (17) du pavillon acoustique (16).

6. Dispositif de capteur d'environnement (14) pour un véhicule (1) comprenant au moins un capteur à ultrasons (10) selon l'une quelconque des revendications 1 à 5.
